# EUROPÄISCHE PATENTSCHRIFT

(11) **EP 3 299 272 B1**
(45) Veröffentlichungstag und Bekanntmachung des Hinweises auf die Patenterteilung: **05.08.2020**
(21) Anmeldenummer: 17187218.7
(22) Anmeldetag: 22.08.2017
(51) Int. Cl.: B62M 6/45

(54) **STEUERUNGSVERFAHREN UND VORRICHTUNG ZUR SCHIEBEHILFE FÜR EIN ELEKTROFAHRRAD**
CONTROL METHOD AND DEVICE FOR PUSHING AID FOR AN ELECTRIC BICYCLE
PROCÉDÉ DE COMMANDE ET DISPOSITIF D'AUXILIAIRE DE COULISSEMENT POUR UNE BICYCLETTE ÉLECTRIQUE

(30) Priorität: 23.09.2016 DE 102016218374
(43) Veröffentlichungstag der Anmeldung: 28.03.2018
(73) Patentinhaber: Robert Bosch GmbH, 70442 Stuttgart (DE)
(72) Erfinder: Greiner, Rinaldo, 72762 Reutlingen (DE); Baumgaertner, Daniel, 72070 Tuebingen (DE)

(56) Entgegenhaltungen:
- EP-A2- 1 129 934

## Beschreibung

Die vorliegende Erfindung betrifft ein Steuerungsverfahren zur Regelung des Elektromotors eines Elektrofahrrads und ein Steuergerät, welches dazu eingerichtet ist, das Steuerungsverfahren durchzuführen. Die Erfindung betrifft auch das Elektrofahrrad mit dem Steuergerät.

### Stand der Technik

In der Schrift EP 2 829 464 A1 ist beschrieben, dass Fahrräder mit elektrischem Hilfsantrieb eine Schiebehilfe aufweisen können. Die Schiebehilfe erlaubt einen Motorantrieb bis zu einer Höchstgeschwindigkeit von z.B. 6 km/h. Hierdurch kann das Fahrrad beispielsweise einfach aus einer Tiefgarage hochgeschoben werden. Zur Aktivierung der Schiebehilfe muss häufig ein Knopf gehalten werden, woraus eine eingeschränkte Handhabbarkeit des Fahrrads resultiert. Mit einem elektrischen Lenkeingriff wird in der Schrift EP 2 829 464 A1 eine unerwünschte Bewegung während des Schiebebetriebs vermieden.

In der nicht veröffentlichten Schrift DE 10 2016 209 570 A1 ist ein Steuerungsverfahren zur Regelung des Elektromotors für die Schiebehilfe eines Elektrofahrrads beschrieben. Das Steuerungsverfahren ermittelt das eingelegte Übersetzungsverhältnis der Gangschaltung in Abhängigkeit einer erfassten Geschwindigkeit. Eine Regelung des Elektromotors erfolgt in Abhängigkeit des ermittelten Übersetzungsverhältnisses. Die Erfassung der Geschwindigkeit erfolgt mit einem Sensor, beispielsweise mit einem Reed-Sensor. Alternativ kann der Sensor ein Beschleunigungssensor sein.

In der nicht veröffentlichten Schrift DE 10 2016 209 560 A1 ist ein Steuerungsverfahren zur Regelung des Elektromotors für die Schiebehilfe eines Elektrofahrrads beschrieben. Das Steuerungsverfahren regelt den Elektromotor in Abhängigkeit eines erfassten Nickwinkels des Elektrofahrrads um dessen Querachse.

Die Schrift EP 1 129 934 A2 offenbart ein gattungsgemäßes motorbetriebenes Fahrrad.

### Offenbarung der Erfindung

Die vorliegende Erfindung betrifft ein Steuerungsverfahren zur Regelung des Elektromotors eines Elektrofahrrads zur Schiebehilfe des Elektrofahrrads. Das Steuerungsverfahren umfasst eine Erkennung einer Aktivierung der Schiebehilfe durch den Radfahrer. Bei einer erkannten Aktivierung wird durch den Elektromotor ein Drehmoment zum Antrieb des Elektrofahrrads als Schiebehilfe erzeugt. Anschließend wird eine Beschleunigung des Elektrofahrrads in Richtung der Längsachse des Elektrofahrrads mittels eines ersten Sensors erfasst, wobei die Beschleunigung aufgrund einer manuellen Schiebe- oder Bremskraft des Radfahrers resultiert, die durch einen Kraftsensor der am Lenker oder am Vorbau angeordnet ist ermittelt wird. Die erfasste Beschleunigung wird in einem weiteren Schritt mit einem Beschleunigungsschwellenwert verglichen, wobei im Falle einer Überschreitung des Beschleunigungsschwellenwerts der Elektromotor in Abhängigkeit einer Änderung der erfassten Beschleunigung zur Anpassung des Drehmoments geregelt wird.

Schiebt ein Radfahrer bei aktivierter Schiebehilfe das Elektrofahrrad also zusätzlich mit einer manuellen Schiebekraft in Längsrichtung an, insbesondere kurzzeitig durch einen manuellen Kraftimpuls, so beschleunigt er das Elektrofahrrad positiv. Dadurch resultiert erfindungsgemäß eine gesteigerte Geschwindigkeit der Schiebehilfe des Elektrofahrrads. Dabei wird allerdings eine Höchstgeschwindigkeit für die Schiebehilfe von beispielsweise 6 km/h durch das Steuerungsverfahren nicht überschritten. Bremst der Radfahrer dagegen das Elektrofahrrad bei aktivierter Schiebehilfe mit einer manuellen Kraft entgegen der Längsrichtung des Elektrofahrrads ab, insbesondere kurzzeitig durch einen manuellen Kraftimpuls, so erfährt das Elektrofahrrad eine Beschleunigung entgegen der Längsrichtung. Folglich wird durch das Steuerungsverfahren das Drehmoment des Elektromotors und somit die Geschwindigkeit der Schiebehilfe des Elektrofahrrads reduziert.

Das Schieben des Elektrofahrrads, insbesondere die Steuerung der Geschwindigkeit des Elektrofahrrads während der Schiebehilfe, wird demnach für den Radfahrer sehr intuitiv und komfortabel. Gegenüber einer einstellbaren Geschwindigkeit der Schiebehilfe mittels beispielsweise eines Schalters am Lenker, erfolgt die Anpassung der Geschwindigkeit mit einem nicht erfindungsgemäßen Steuerungsverfahren unabhängig von einer Greifposition des Radfahrers, d.h. der Radfahrer kann das Elektrofahrrad beispielsweise am Lenker, am Sattel und/oder am Gepäckträger greifen.

In einer bevorzugten Ausgestaltung wird in einem weiteren Schritt die Geschwindigkeit des Elektrofahrrads ermittelt. Die ermittelte Geschwindigkeit wird außerdem mit einem Geschwindigkeitsschwellenwert verglichen. In dieser Ausgestaltung der Erfindung erfolgt die Regelung des Elektromotors nur, wenn die ermittelte Geschwindigkeit den Geschwindigkeitsschwellenwert überschreitet. Dadurch startet die erfindungsgemäße Regelung verzögert und, wenn die Beschleunigung des Elektrofahrrads auf eine manuelle Schiebekraft des Radfahrers in Richtung der Längsachse zurückzuführen ist.

In einer besonders bevorzugten Ausgestaltung der Erfindung wird zusätzlich eine Sensorgröße mittels eines zweiten Sensors erfasst, wobei die erfasste Sensorgröße ein Nicken des Elektrofahrrads um dessen Querachse repräsentiert. Insbesondere wird als Sensorgröße eine aktuelle Drehrate erfasst oder ein Maß für den aktuellen Nickwinkel des Elektrofahrrads um dessen Querachse ermittelt. Als Sensorgröße kann alternativ mittels des zweiten Sensors eine Beschleunigung in Richtung der Hochachse erfasst werden, d.h. durch den ersten Sensor und den zweiten Sensor wird eine zweidimensionale Beschleunigung erfasst, welche das Nicken repräsentiert. Die Regelung des Elektromotors erfolgt in dieser Ausgestaltung zusätzlich in Abhängigkeit der mittels des zweiten Sensors erfassten Sensorgröße. Beispielsweise wird an einer zunehmend steiler werdenden Fahrtstrecke die Drehrate um die Querachse des Elektrofahrrads mittels des zweiten Sensors erfasst. Die Regelung erfolgt in Abhängigkeit der Drehrate, beispielsweise nur wenn die Drehrate Null ist. Dadurch bleibt das Steuerungsverfahren am Hang einer Fahrtstrecke intuitiv und komfortabel.

Die Erfindung betrifft auch das Steuergerät, welches dazu eingerichtet ist, das Steuerungsverfahren durchzuführen. Das Steuergerät umfasst eine Recheneinheit, welche eine Aktivierung der Schiebehilfe durch den Radfahrer erkennt und in Abhängigkeit der Aktivierung ein Steuersignal für den Elektromotor erzeugt. Die Recheneinheit erfasst außerdem die Beschleunigung des Elektrofahrrads in Richtung der Längsachse. In Abhängigkeit einer Überschreitung des Beschleunigungsschwellenwertes wird anschließend das erzeugte Steuersignal durch die Recheneinheit in Abhängigkeit der erfassten Beschleunigung des Elektrofahrrads in Längsrichtung angepasst. Die Regelung des Steuersignals für den Elektromotor erfolgt dabei bevorzugt erst verzögert nach der Aktivierung der Schiebehilfe und/oder zusätzlich erst nachdem die Geschwindigkeit des Elektrofahrrads einen Geschwindigkeitsschwellenwert überschritten hat.

Vorzugsweise erfasst die Recheneinheit außerdem eine aktuelle Sensorgröße, welche das Nicken des Elektrofahrrads repräsentiert. Beispielsweise ist die Sensorgröße der Nickwinkel bzw. die Drehrate des Elektrofahrrads um dessen Querachse oder die Beschleunigung des Elektrofahrrads in Richtung der Hochachse. Die Recheneinheit passt in dieser Ausgestaltung das Steuersignal zusätzlich in Abhängigkeit der erfassten Sensorgröße an, welche das Nicken des Elektrofahrrads repräsentiert.

Das erfindungsgemäße Elektrofahrrad umfasst wenigstens den Elektromotor, einen ersten Sensor zur Erfassung einer Beschleunigung des Elektrofahrrads in Längsrichtung, und das Steuergerät. Optional umfasst das Elektrofahrrad einen Geschwindigkeitssensor zur Erfassung der Geschwindigkeit. In einer bevorzugten Ausgestaltung weist das Elektrofahrrad außerdem einen zweiten Sensor zur Erfassung einer Sensorgröße auf, welche das Nicken des Elektrofahrrads um dessen Querachse repäsentiert. Der erste Sensor als auch der zweite Sensor sind bevorzugt in einer inertialen Messeinheit am Elektrofahrrad angeordnet.

Die vorliegende Erfindung wird nachfolgend anhand bevorzugter Ausführungsformen und beigefügter Zeichnungen erläutert.
- Figur 1:: Elektrofahrrad
- Figur 2:: Blockschaltbild eines Steuergerätes
- Figur 3:: Flussdiagramm eines Steuerungsverfahrens
- Figur 4:: Diagramm des Beschleunigungs- und des Geschwindigkeitsverlaufs

### Ausführungsbeispiele

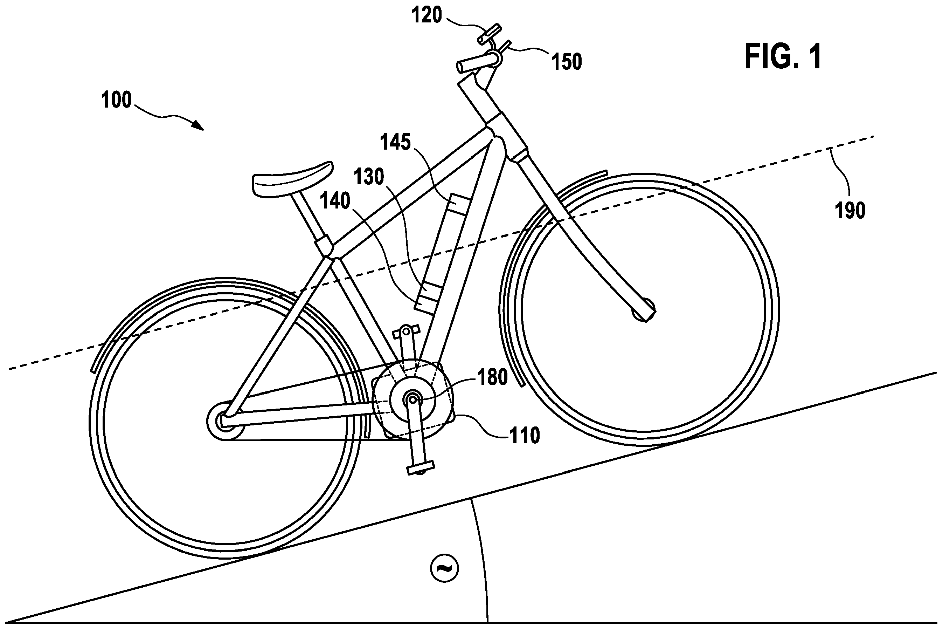

In Figur 1 ist ein erfindungsgemäßes Elektrofahrrad 100 dargestellt. Das Elektrofahrrad 100 umfasst einen Elektromotor 110, einen ersten Sensor 130 zur Erfassung einer Beschleunigung a des Elektrofahrrads 100 in Längsrichtung 190 und ein Steuergerät 120 zur Regelung des Elektromotors 110. Das Elektrofahrrad 100 weist optional einen zweiten Sensor 140 auf, wobei mittels des zweiten Sensors 140 eine Sensorgröße erfasst wird, welche ein Nicken des Elektrofahrrads 100 um dessen Querachse repräsentiert. Vorzugsweise weist das Elektrofahrrad 100 eine inertiale Messeinheit auf, welche den ersten Sensor 130 und den zweiten Sensor 140 umfasst. Des Weiteren ist bevorzugt am Elektrofahrrad 100 ein Schalter 150 zum Aktivieren der Schiebehilfe durch den Radfahrer angeordnet, insbesondere am Lenker. Weiterhin kann ein Geschwindigkeitssensor 145 am Elektrofahrrad 100 angeordnet sein.

Nicht erfindungsgemäß ist der erste Sensor 130 ein Beschleunigungssensor, welcher die Beschleunigung a des Elektrofahrrads 100 zumindest in Längsrichtung 190 des Elektrofahrrads 100 und somit auch eine Änderung der Beschleunigung a direkt und sehr genau erfasst. Der erste Sensor 130 kann ebenso nicht erfindungsgemäß ein Drehmomentsensor sein, wobei der Drehmomentsensor an einer Achse 180 des Elektromotors 110 angeordnet ist und das Motordrehmoment bzw. Antriebsmoment des Elektromotors 110 erfasst. Der Drehmomentsensor an der Achse 180 des Elektromotors 110 erfasst indirekt auch die Beschleunigung a durch eine manuelle Kraft des Radfahrers, weil durch die Kraft des Radfahrers das Antriebsmoment an der Achse 180 des Elektromotors 110 im Vergleich zum vorher erzeugten Drehmoment M des Elektromotors 110 reduziert oder erhöht wird. In einer alternativen Ausgestaltung der Erfindung ist der erste Sensor 130 ein Kraftsensor. Der Kraftsensor ist am Lenker oder am Vorbau des Elektrofahrrads 100 angeordnet. Eine manuelle Schiebe- oder Bremskraft des Radfahrers auf das Elektrofahrrad 100 in Längsrichtung wird durch den Kraftsensor erfasst und eine daraus resultierende Beschleunigung a des Elektrofahrrads 100 ermittelt.

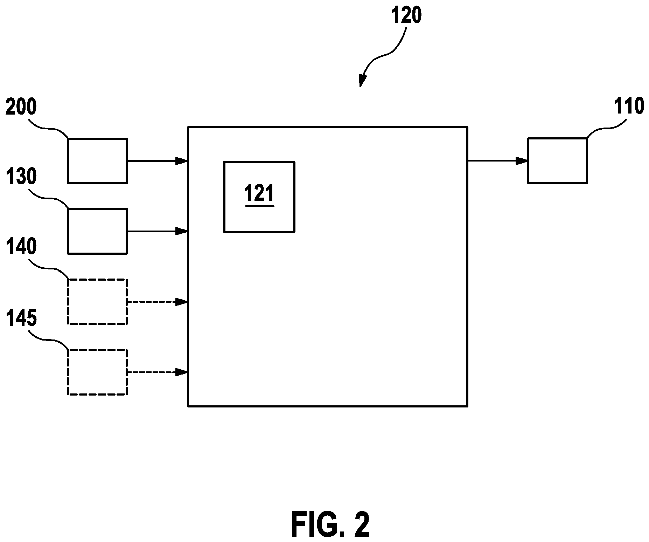

In Figur 2 ist das Steuergerät 120 dargestellt. Das Steuergerät 120 umfasst eine Recheneinheit 121. Die Recheneinheit 121 erfasst die Aktivierung der Schiebehilfe durch den Radfahrer 200 und die Beschleunigung a des Elektrofahrrads 100 in Längsrichtung von dem ersten Sensor 130. Optional erfasst die Recheneinheit 121 eine Sensorgröße von dem zweiten Sensor 140, welche das Nicken des Elektrofahrrads 100 um dessen Querachse repräsentiert. Die Recheneinheit 121 kann zusätzlich die Geschwindigkeit v des Elektrofahrrads 100 von dem Geschwindigkeitssensor 145 erfassen. Die Recheneinheit 121 erzeugt in Abhängigkeit der Aktivierung der Schiebehilfe ein Steuersignal für den Elektromotor 110. Das Steuersignal wird durch die Recheneinheit 121 in Abhängigkeit der Änderung der erfassten Beschleunigung a angepasst, wenn die erfasste Beschleunigung a einen Beschleunigungsschwellenwert SWₐ überschreitet. Die Anpassung des Steuersignals kann nach der Aktivierung der Schiebehilfe zeitlich verzögert, insbesondere nach 1s, 2s, 4s oder 8s oder nach dem Überschreiten eines Geschwindigkeitsschwellenwertes SWᵥ erfolgen. Optional wird das Steuersignal durch die Recheneinheit 121 zusätzlich in Abhängigkeit der erfassten Sensorgröße angepasst, welche das Nicken des Elektrofahrrads 100 repräsentiert.

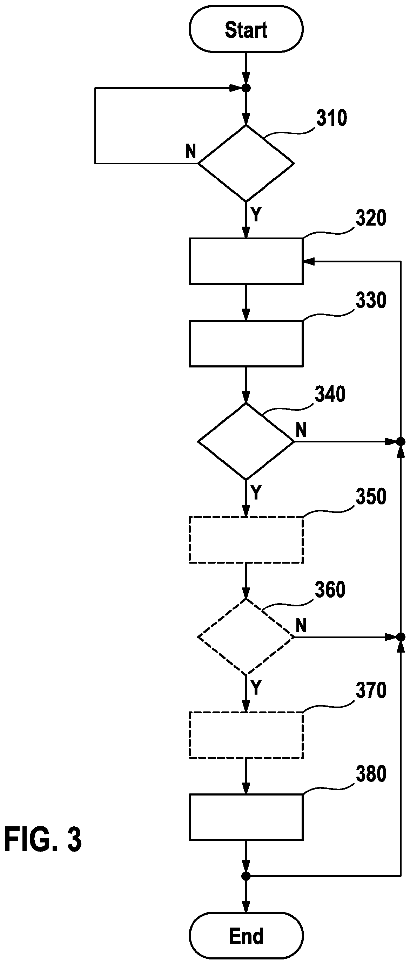

In Figur 3 ist ein Ablaufdiagramm des erfindungsgemäßen Steuerungsverfahrens zur Schiebehilfe des Elektrofahrrads 100 dargestellt. Das Steuerungsverfahren umfasst eine Erkennung 310 einer Aktivierung der Schiebehilfe durch den Radfahrer, beispielsweise drückt der Radfahrer 200 zur Aktivierung den am Lenker angeordneten Schalter 150. Alternativ kann die Aktivierung 310 der Schiebehilfe durch einen akustischen Befehl des Radfahrers 200, welcher durch ein am Elektrofahrrad 100 angeordnetes Mikrofon erfasst wird, erfolgen. Bei nicht erkannter Aktivierung werden die weiteren Schritte des Steuerungsverfahrens nicht durchgeführt. Wird die Aktivierung 310 erkannt, wird im Schritt 320 mittels des Elektromotors 110 ein Drehmoment M zum Antrieb des Elektrofahrrads 100 erzeugt. Anschließend wird in einem weiteren Schritt 330 mittels des ersten Sensors 130 die Beschleunigung a des Elektrofahrrads 100 in Richtung der Längsachse 190 erfasst. In einem anschließenden Schritt 340 wird die erfasste Beschleunigung a mit einem Beschleunigungsschwellenwert SWₐ verglichen. Falls die Beschleunigung a des Elektrofahrrads 100 in Längsrichtung 190 den Beschleunigungsschwellenwert SWₐ überschreitet, wird in einem folgenden Schritt 380 der Elektromotor 110 in Abhängigkeit der Änderung der erfassten Beschleunigung a geregelt. Nach der Regelung 380 kann das Steuerungsverfahren wiederholt ablaufen, wobei das Steuerungsverfahren dann mit dem Schritt 320 beginnt.

Der Radfahrer muss also mindestens eine durch den Beschleunigungsschwellenwert SWₐ vorbestimmte Kraft auf das Elektrofahrrad 100 aufbringen, hier einen Schiebekraft- oder Bremskraftimpuls, damit durch die Regelung 380 das Drehmoment M des Elektromotors 110 angepasst wird.

In einer weiteren Ausgestaltung der Erfindung ist der Beschleunigungsschwellenwert Null, so dass der Elektromotor unabhängig von der Höhe der Beschleunigung geregelt wird.

In einer alternativen Ausgestaltung erfolgt nach der Erzeugung 320 des Drehmoments M die Erfassung 330 der Beschleunigung a des Elektrofahrrads 100 in Richtung der Längsachse und/oder die Regelung 380 des Elektromotors 110 nach Ablauf einer Zeitspanne nach der Aktivierung 310 der Schiebehilfe, beispielsweise nach 1s, 2s, 4s oder 8s. Die Zeitspanne ist insbesondere so gewählt, dass die Regelung 380 des Elektromotors 110 erst erfolgt, nachdem das Elektrofahrrad 100 im Schritt 320 mittels des erzeugten Drehmoments M auf eine erste Geschwindigkeit v₁ beschleunigt wurde und die erste Geschwindigkeit für eine kurze Zeitspanne konstant bleibt.

In einer weiteren Ausgestaltung wird nach der Erzeugung 320 des Drehmoments M und vor der Regelung 380 in einem Schritt 350 die Geschwindigkeit v des Elektrofahrrads 100 mit dem optionalen Geschwindigkeitssensor 145 erfasst. In einem darauf folgenden Schritt 360 erfolgt ein Vergleich der erfassten Geschwindigkeit v mit einem Geschwindigkeitsschwellenwert SWᵥ. Falls die Geschwindigkeit v den Geschwindigkeitsschwellenwert SWᵥ überschreitet, erfolgt in dieser Ausgestaltung die Regelung 380 des Elektromotors 110. Wenn die Geschwindigkeit v den Geschwindigkeitsschwellenwert SWᵥ nicht überschreitet, wird durch den Elektromotor 110 weiterhin, entsprechend des Schrittes 320, ein beispielsweise konstantes Drehmoment M erzeugt. Dadurch wird die Regelung 380 des Elektromotors 110 erst nach dem Erreichen einer ersten Geschwindigkeit v₁ bzw. nur nach einer manuellen Schiebe- oder Bremskraft des Radfahrers 200 durchgeführt.

In einem optionalen Schritt 370 vor der Regelung 380 des Elektromotors wird mittels des zweiten Sensors 140 eine aktuelle Sensorgröße erfasst, welche das Nicken des Elektrofahrrads 100 repräsentiert. Die Regelung 380 des Elektromotors 110 erfolgt in dieser Ausgestaltung zusätzlich in Abhängigkeit der erfassten Sensorgröße.

Beispielsweise wird im Schritt 370 die aktuelle Drehrate Θ̇ des Elektrofahrrads 100 um dessen Querachse als Sensorgröße erfasst. Die Regelung 380 des Elektromotors 110 erfolgt in diesem Beispiel nur, wenn die Drehrate Θ̇ um dessen Querachse Null oder kleiner einem Schwellenwert SW Θ̇ ist, d.h. wenn das Elektrofahrrad 100 nicht um dessen Querachse nickt.

In einem alternativen Beispiel wird im Schritt 370 eine Beschleunigung a_{z} des Elektrofahrrads 100 in Richtung der Hochachse als Sensorgröße mittels des zweiten Sensors 140 erfasst. In Abhängigkeit der zweidimensionalen Beschleunigung des Elektrofahrrads, d.h. der erfassten Beschleunigungen a in Richtung der Längsachse 190 und a_{z} in Richtung der Hochachse kann das Nicken bzw. die Drehrate Θ̇ des Elektrofahrrads 100 um die Querachse ermittelt werden. Die Regelung 380 des Elektromotors 110 erfolgt in diesem Beispiel ebenfalls nur, wenn die in Abhängigkeit der zweidimensionalen Beschleunigung ermittelte Drehrate Θ̇ um dessen Querachse Null oder kleiner einem Schwellenwert SW Θ̇ ist, d.h. wenn das Elektrofahrrad 100 nicht um dessen Querachse nickt.

In einem weiteren, alternativen Beispiel wird im Schritt 370 ein Nickwinkels Θ in Abhängigkeit der Erfassung der Sensorgröße mittels des zweiten Sensors 140 ermittelt und die hangabwärts gerichtete Beschleunigung des Elektrofahrrads 100 in Längsrichtung 190 aufgrund des Eigengewichtes in Abhängigkeit des Nickwinkels Θ ermittelt. Anschließend erfolgt eine Differenz zwischen der mittels des ersten Sensors 130 erfassten, aktuellen Beschleunigung in Längsrichtung und der ermittelten Beschleunigung des Elektrofahrrads aufgrund des Eigengewichtes. Die Regelung 380 des Elektromotors erfolgt in diesem Beispiel in Abhängigkeit der ermittelten Beschleunigungsdifferenz, d.h. in Abhängigkeit der Sensorgröße, welche das Nicken des Elektrofahrrads repräsentiert.

Bevorzugt ist der zweite Sensor 140 ein Drehratensensor, welcher die Drehrate Θ̇ des Elektrofahrrads 100 um dessen Querachse erfasst. Alternativ ist der zweite Sensor ein Beschleunigungssensor, welcher die Beschleunigung des Elektrofahrrads 100 in Richtung der Hochachse des Elektrofahrrads 100 erfasst. Der erste Sensor 130 und zweite Sensor 140 können gemeinsam in einer inertialen Messeinrichtung angeordnet sein.

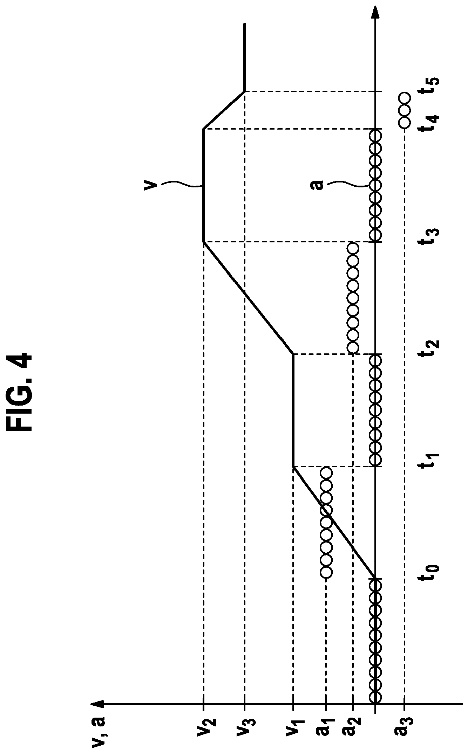

In Figur 4 ist ein Diagramm der zeitabhängigen Beschleunigung a und des zeitlichen Geschwindigkeitsverlaufs v des Elektrofahrrads 100 entsprechend des Beschleunigungsverhaltens dargestellt. Zum Zeitpunkt t₀ wird die Schiebehilfe durch den Radfahrer aktiviert. Durch das Steuerungsverfahren wird die Aktivierung 310 erkannt und anschließend das Drehmoment M durch den Elektromotor 110 erzeugt, wodurch das Elektrofahrrad 100 in Längsrichtung mit einer konstanten Beschleunigung a₁ beschleunigt wird. Der zeitliche Verlauf der Beschleunigung a des Elektrofahrrads 100 während des Schritts 320 durch das Drehmoment M kann unterschiedlich ausgestaltet sein. In dieser Anfangsphase des Steuerungsverfahrens zur Schiebehilfe erfolgt bevorzugt keine Regelung 380 des Drehmoments M in Abhängigkeit der erfassten Beschleunigung a des Elektrofahrrads 100 in Richtung der Längsachse 190. Nach dem Erreichen der ersten Geschwindigkeit v₁ des Elektrofahrrads 100 zum Zeitpunkt t₁ von beispielsweise 3 km/h liegt zunächst keine weitere Beschleunigung a des Elektrofahrrads 100 in Längsrichtung vor, siehe Figur 4. Die erste Geschwindigkeit v₁ bleibt bis zum Zeitpunkt t₂ konstant, weil keine Beschleunigung a des Elektrofahrrads 100 in Längsrichtung durch eine manuelle Schiebe- oder Bremskraft bzw. ein Kraftimpuls des Radfahrers vorliegt. Zwischen einem Zeitpunkt t₂ und einem Zeitpunkt t₃ beschleunigt der Radfahrer das Elektrofahrrad 100 positiv in Längsrichtung mittels einer manuellen Kraft. Die positive Beschleunigung a des Elektrofahrrads 100 in Längsrichtung wird erfasst und es wird eine Regelung 380 des Elektromotors 110 zur Erhöhung des Drehmoments M durchgeführt, sodass die Geschwindigkeit v des Elektrofahrrads 100 zwischen dem Zeitpunkt t₂ und dem Zeitpunkt t₃ erhöht wird. Dadurch resultiert eine zweite Geschwindigkeit v₂. Zwischen dem Zeitpunkt t₃ und dem Zeitpunkt t₄ bleibt die zweite Geschwindigkeit v₂ konstant. Zwischen einem Zeitpunkt t₄ und einem Zeitpunkt t₅ beschleunigt der Radfahrer das Elektrofahrrad 100 negativ, d.h. entgegen Längsrichtung. Der Radfahrer 200 bremst demnach das Elektrofahrrad 100 mit einer manuellen Kraft ab. Die Beschleunigung a des Elektrofahrrads 100 entgegen der Längsrichtung wird durch das Steuerungsverfahren im Schritt 330 erfasst und es wird eine Regelung 380 des Elektromotors 110 durchgeführt, wodurch das Drehmoment M des Elektromotors 110 erniedrigt wird, sodass die Geschwindigkeit des Elektrofahrrads 100 zwischen dem Zeitpunkt t₄ und dem Zeitpunkt t₅ reduziert wird. Schließlich wird mittels des Elektromotors 110 durch das Drehmoment M eine dritte Geschwindigkeit v₃ der Schiebehilfe erzeugt. Auf diese Weise kann der Radfahrer eine bevorzugte Geschwindigkeit der Schiebehilfe einstellen, indem er eine entsprechende manuelle Schiebe- oder Bremskraft auf das Fahrrad ausübt.

Der Radfahrer 200 kann demnach durch das Steuerungsverfahren im Gehen bzw. beim Schieben die Geschwindigkeit v der Schiebehilfe des Elektrofahrrads 100 intuitiv und komfortabel, beispielsweise durch manuelle Kraftimpulse, anpassen.

Bei einer Änderung der Steigung einer Fahrtstrecke bzw. Schiebestrecke erfolgt aufgrund des Eigengewichts eine Beschleunigung a des Elektrofahrrads 100 in Längsrichtung, welche durch den ersten Sensor 130 erfasst wird. In einer bevorzugten Ausgestaltung der Erfindung soll sich die mittels des erfindungsgemäßen Steuerungsverfahrens eingestellte bzw. geregelte Geschwindigkeit v der Schiebehilfe des Elektrofahrrads 100 auch bei einer Änderung der Steigung einer Fahrtstrecke bzw. Schiebestrecke nicht ändern, wenn der Radfahrer keine entsprechende Schiebe- oder Bremskraft auf das Elektrofahrrad 100 in Längsrichtung ausübt. In dieser bevorzugten Ausgestaltung wird eine Unterscheidung der Beschleunigungsursache zwischen einer Steigungsänderung der Fahrtstrecke und einer manuellen Schiebe- oder Bremskraft durch eine Erfassung der Geschwindigkeit v des Elektrofahrrads mittels des zusätzlichen Geschwindigkeitssensors 145 oder einer Ermittlung der Geschwindigkeit v, beispielsweise in Abhängigkeit der erfassten Beschleunigung a des Elektrofahrrads in Längsrichtung, durchgeführt. Wird eine reduzierte Geschwindigkeit v des Elektrofahrrads 100 trotz eines konstanten Drehmoments des Elektromotors 110 und keine Beschleunigung a oberhalb des Beschleunigungsschwellenwerts SWₐ entgegen der Längsrichtung des Elektrofahrrads erfasst, so liegt mit hoher Wahrscheinlichkeit eine positive Steigung der Fahrtstrecke vor. In diesem Fall wird das Drehmoment des Elektromotors 110 in Abhängigkeit der Geschwindigkeit erhöht, bis die ursprüngliche Geschwindigkeit vor der Steigungsänderung wieder erreicht ist. Wird dagegen eine erhöhte Geschwindigkeit v des Elektrofahrrads 100 trotz eines konstanten Drehmoments des Elektromotors 110 und keine Beschleunigung a oberhalb des Beschleunigungsschwellenwerts SWₐ in Längsrichtung des Elektrofahrrads erfasst, so liegt mit hoher Wahrscheinlichkeit ein Gefälle bzw. eine negative Steigung der Fahrtstrecke vor. In diesem Fall wird das Drehmoment des Elektromotors 110 in Abhängigkeit der Geschwindigkeit reduziert, bis die ursprüngliche Geschwindigkeit vor der Steigungsänderung wieder erreicht ist.

Alternativ wird in einer weiteren Ausgestaltung in einem Schritt 370 mit dem zweiten Sensor 140 die Sensorgröße erfasst, welche das Nicken des Elektrofahrrads 100 um dessen Querachse repräsentiert. Die Regelung 380 des Elektromotors 110 zur Anpassung des Drehmoments M bzw. der Geschwindigkeit v erfolgt in dieser Ausgestaltung in Abhängigkeit der erfassten Sensorgröße des zweiten Sensors 140. Der zweite Sensor 140 erfasst als Sensorgröße beispielsweise eine Drehrate um die Querachse des Elektrofahrrads 100, d.h. der zweite Sensor 140 ist ein Drehratensensor. Mittels der Erfassung der Drehrate wird eine Steigungsänderung in der Fahrtstrecke detektiert. In dieser Ausgestaltung wird bei einer erfassten Drehrate entweder keine Regelung 380 durchgeführt oder der Beschleunigungsschwellenwert SWₐ wird in Abhängigkeit der erfassten Drehrate um die Querachse angepasst, wobei beim Nicken des Elektrofahrrads 100 nach vorne der Beschleunigungsschwellenwert SWₐ entgegen der Längsrichtung reduziert und/oder der Beschleunigungsschwellenwert SWₐ in Längsrichtung erhöht wird, bis die ursprüngliche Geschwindigkeit vor der Steigungsänderung der Fahrtstrecke wieder erreicht ist. Beim Nicken des Elektrofahrrads 100 nach hinten, erfolgt dagegen eine Erhöhung des Beschleunigungsschwellenwerts SWₐ entgegen der Längsrichtung und/oder eine Reduktion des Beschleunigungsschwellenwerts SWₐ in Längsrichtung, bis die ursprüngliche Geschwindigkeit vor der Steigungsänderung der Fahrtstrecke wieder erreicht ist.

## Patentansprüche

1. Steuerungsverfahren zur Regelung des Elektromotors (110) eines Elektrofahrrads (100) wenigstens umfassend der Schritte
• Erkennung (310) einer Aktivierung der Schiebehilfe durch den Radfahrer, und
• Erzeugung (320) eines Drehmoments durch den Elektromotor (110) zum Antrieb des Elektrofahrrads (100) in Abhängigkeit der erkannten Aktivierung,
**dadurch gekennzeichnet, dass** die folgenden Schritte durchgeführt werden
• Erfassung (330) einer Beschleunigung (a) des Elektrofahrrads (100) in Richtung der Längsachse mittels eines ersten Sensors (130), welcher ein Kraftsensor ist der am Lenker oder am Vorbau angeordnet ist und wobei die Beschleunigung aufgrund einer mit diesem Sensor (130) erfassten manuellen Schiebe- oder Bremskraft des Radfahrers ermittelt wird, und
• Vergleich (340) der Beschleunigung mit einem Beschleunigungsschwellenwert (SWₐ),
wobei in Abhängigkeit einer Überschreitung des Beschleunigungsschwellenwerts (SWₐ) der folgende Schritt durchgeführt wird
• Regelung (380) des Elektromotors (110) in Abhängigkeit einer Änderung der erfassten Beschleunigung (a).

2. Steuerungsverfahren nach Anspruch 1, **dadurch gekennzeichnet, dass** die folgenden Schritte durchgeführt werden
• Ermittlung (350) einer Geschwindigkeit (v) des Elektrofahrrads (100), und
• Vergleich (360) der erfassten Geschwindigkeit (v) mit einem Geschwindigkeitsschwellenwert (SWᵥ), wobei in Abhängigkeit einer Überschreitung des Geschwindigkeitsschwellenwerts (SWᵥ) die Regelung (380) des Elektromotors (110) erfolgt.

3. Steuerungsverfahren nach einem der Ansprüche 1 oder 2, **dadurch gekennzeichnet, dass** eine Erfassung (370) einer Sensorgröße mittels eines zweiten Sensors (140) erfolgt, welche ein Nicken des Elektrofahrrads (100) um dessen Querachse repräsentiert, insbesondere eine Drehrate 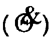 um die Querachse des Elektrofahrrads (100), wobei die Regelung (380) des Elektromotors (110) zusätzlich in Abhängigkeit der erfassten Sensorgröße erfolgt.

4. Steuergerät (120), welches ein Steuerungsverfahren nach einem der Ansprüche 1 bis 3 durchführt, umfassend eine Recheneinheit (121), welche
• eine Aktivierung der Schiebehilfe durch den Radfahrer erkennt,
• ein Steuersignal für einen Elektromotor (110) in Abhängigkeit der Aktivierung der Schiebehilfe erzeugt, und
• eine Beschleunigung (a) des Elektrofahrrads (100) in Längsrichtung durch einen Sensor (130) erfasst, wobei der Sensor (130) ein Kraftsensor ist, und
wobei die Recheneinheit (121) in Abhängigkeit einer Überschreitung eines Beschleunigungsschwellenwert (SWₐ)
• das Steuersignal in Abhängigkeit einer Änderung der erfassten Beschleunigung (a) anpasst.

5. Steuergerät nach Anspruch 4, **dadurch gekennzeichnet, dass** die Recheneinheit (121) eine aktuelle Geschwindigkeit (v) des Elektrofahrrads (100) ermittelt, wobei die Recheneinheit (121) das Steuersignal in Abhängigkeit einer Überschreitung eines Geschwindigkeitsschwellenwerts (SWᵥ) anpasst.

6. Steuergerät nach einem der Ansprüche 4 oder 5, **dadurch gekennzeichnet, dass** die Recheneinheit (121) eine Sensorgröße erfasst, welche ein Nicken des Elektrofahrrads (100) um dessen Querachse repräsentiert, insbesondere eine Drehrate 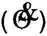 um die Querachse des Elektrofahrrads (100), wobei die Recheneinheit (121) das Steuersignal zusätzlich in Abhängigkeit der erfassten Sensorgröße anpasst.

7. Elektrofahrrad (100), umfassend
• einen Elektromotor (110),
• einen ersten Sensor (130) zur Erfassung einer Beschleunigung (a) des Elektrofahrrads (100) in Längsrichtung, und
• ein Steuergerät (120) nach einem der Ansprüche 4 bis 6.

8. Elektrofahrrad nach Anspruch 7, **dadurch gekennzeichnet, dass** das Elektrofahrrad einen zweiten Sensor (140) aufweist, wobei der zweite Sensor (140) eine Sensorgröße erfasst, welche ein Nicken des Elektrofahrrads repräsentiert, insbesondere weist das Elektrofahrrad als zweiten Sensor (140)
• einen Beschleunigungssensor, welcher die Beschleunigung (a_{z}) des Elektrofahrrads (100) in Richtung der Hochachse erfasst, und/oder
• ein Drehratensensor, welcher die Drehrate 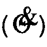 um die Querachse des Elektrofahrrads (100) erfasst
auf.

## Claims

1. Control method for controlling the electric motor (110) of an electric bicycle (100) at least comprising the steps
• detecting (310) activation of the pushing aid by the cyclist, and
• generating (320) a torque by the electric motor (110) in order to drive the electric bicycle (100) in accordance with the detected activation,
**characterized in that** the following steps are carried out
• sensing (330) an acceleration (a) of the electric bicycle (100) in the direction of the longitudinal axis by means of a first sensor (130) which is a force sensor which is arranged on the handlebars or on the handlebar stem, and wherein the acceleration is determined on the basis of a manual pushing or braking force, sensed with this sensor (130), of the cyclist, and
• comparing (340) the acceleration with an acceleration threshold value (SWₐ),
wherein the following step is carried out as a function of upward transgression of the acceleration threshold value (SWₐ)
• control (380) of the electric motor (110) in accordance with a change in the sensed acceleration (a) .

2. Control method according to Claim 1, **characterized in that** the following steps are carried out
• determining (350) a velocity (v) of the electric bicycle (100)
and
• comparing (360) the sensed velocity (v) with a velocity threshold value (SWᵥ), wherein the control (380) of the electric motor (110) is carried out as a function of upward transgression of the velocity threshold value (SWᵥ).

3. Control method according to one of Claims 1 and 2, **characterized in that** a second sensor (140) acquires (370) a sensor variable which represents pitching of the electric bicycle (100) about its transverse axis, in particular a rotational rate 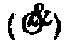 about the transverse axis of the electric vehicle (100), wherein the control (380) of the electric motor (110) is additionally carried out as a function of the acquired sensor variable.

4. Control device (120) which carries out a control method according to one of Claims 1 to 3, comprising a computing unit (121) which
• detects activation of the pushing aid by the cyclist,
• generates a control signal for an electric motor (110) as a function of the activation of the pushing aid, and
• senses acceleration (a) of the electric bicycle (100) in the longitudinal direction by means of a sensor (130), wherein the sensor (130) is a force sensor, and
wherein the computing unit (121) adapts
• the control signal as a function of a change in the sensed acceleration (a)
as a function of upward transgression of an acceleration threshold value (SWₐ).

5. Control device according to Claim 4, **characterized in that** the computing unit (121) determines a current velocity (v) of the electric bicycle (100), wherein the computing unit (121) adapts the control signal as a function of upward transgression of a velocity threshold value (SWᵥ).

6. Control device according to one of Claims 4 and 5, **characterized in that** the computing unit (121) acquires a sensor variable which represents pitching of the electric bicycle (100) about its transverse axis, in particular a rotational rate 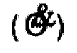 about the transverse axis of the electric bicycle (100), wherein the computing unit (121) additionally adapts the control signal as a function of the acquired sensor variable.

7. Electric bicycle (100) comprising
• an electric motor (110),
• a first sensor (130) sensing an acceleration (a) of the electric bicycle (100) in the longitudinal direction, and
• a control unit (120) according to one of Claims 4 to 6.

8. Electric bicycle according to Claim 7, **characterized in that** the electric bicycle has a second sensor (140), wherein the second sensor (140) acquires a sensor variable which represents pitching of the electric bicycle, in particular the electric bicycle has, as a second sensor (140),
• an acceleration sensor which senses the acceleration (a_{z}) of the electric bicycle (100) in the direction of the vertical axis, and/or
• a rotational rate sensor which senses the rotational rate 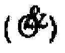 about the transverse axis of the electric bicycle (100).

## Revendications

1. Procédé de commande pour réguler un moteur électrique (110) d'une bicyclette électrique (100), comprenant au moins les étapes suivantes
* reconnaissance (310) d'une activation de l'aide à la propulsion par le cycliste, et
* génération (320) d'un couple par le moteur électrique (110) pour entraîner la bicyclette électrique (100) en fonction de l'activation reconnue,
**caractérisé en ce que** les étapes suivantes sont exécutées
* détection (330) d'une accélération (a) de la bicyclette électrique (100) dans la direction de l'axe longitudinal au moyen d'un premier capteur (130), lequel est un capteur de force qui est disposé sur le guidon ou au niveau de l'avant-corps et l'accélération étant déterminée sur la basé d'une force de propulsion ou de freinage manuelle du cycliste détectée avec ce capteur (130), et
* comparaison (340) de l'accélération avec une valeur de seuil d'accélération (SWₐ),
l'étape suivante étant exécutée en fonction d'un dépassement de la valeur de seuil d'accélération (SWₐ)
* régulation (380) du moteur électrique (110) en fonction d'une modification de l'accélération (a) détectée.

2. Procédé de commande selon la revendication 1, **caractérisé en ce que** les étapes suivantes sont exécutées
* détermination (350) d'une vitesse (v) de la bicyclette électrique (100), et
* comparaison (360) de la vitesse (v) acquise avec une valeur de seuil de vitesse (SWᵥ), la régulation (380) du moteur électrique (110) s'effectuant en fonction d'un dépassement de la valeur de seuil de vitesse (SWᵥ).

3. Procédé de commande selon l'une des revendications 1 ou 2, **caractérisé en ce qu'**une détection (370) d'une grandeur de capteur s'effectue au moyen d'un deuxième capteur (140) qui représente un tangage de la bicyclette électrique (100) autour de son axe transversal, notamment une vitesse de rotation (&) autour de l'axe transversal de la bicyclette électrique (100), la régulation (380) du moteur électrique (110) s'effectuant en plus en fonction de la grandeur de capteur détectée.

4. Contrôleur (120) qui met en œuvre un procédé de commande selon l'une des revendications 1 à 3, comprenant une unité de calcul (121) qui
* reconnaît une activation de l'aide à la propulsion par le cycliste,
* génère un signal de commande pour un moteur électrique (110) en fonction de l'activation de l'aide à la propulsion, et
* détecte une accélération (a) de la bicyclette électrique (100) dans la direction longitudinale par un capteur (130), le capteur (130) étant un capteur de force, et
l'unité de calcul (121), en fonction d'un dépassement d'une valeur de seuil d'accélération (SWₐ)
* adaptant le signal de commande en fonction d'une modification de l'accélération (a) détectée.

5. Contrôleur selon la revendication 4, **caractérisé en ce que** l'unité de calcul (121) détermine une vitesse (v) actuelle de la bicyclette électrique (100), l'unité de calcul (121) adaptant le signal de commande en fonction d'un dépassement d'une valeur de seuil de vitesse (SWᵥ).

6. Contrôleur selon l'une des revendications 4 ou 5, **caractérisé en ce que** l'unité de calcul (121) détecte une grandeur de capteur qui représente un tangage de la bicyclette électrique (100) autour de son axe transversal, notamment une vitesse de rotation (&) autour de l'axe transversal de la bicyclette électrique (100), l'unité de calcul (121) adaptant en plus le signal de commande en fonction de la grandeur de capteur détectée.

7. Bicyclette électrique (100) comprenant
* un moteur électrique (110),
* un premier capteur (130) destiné à détecter une accélération (a) de la bicyclette électrique (100) dans la direction longitudinale, et
* un contrôleur (120) selon l'une des revendications 4 à 6.

8. Bicyclette électrique selon la revendication 7, **caractérisée en ce que** la bicyclette électrique possède un deuxième capteur (140), le deuxième capteur (140) détectant une grandeur de capteur qui représente un tangage de la bicyclette électrique, la bicyclette électrique possédant notamment en tant que deuxième capteur (140)
* un capteur d'accélération qui détecte l'accélération (a_{z}) de la bicyclette électrique (100) dans la direction de l'axe de hauteur, et/ou
* un capteur de vitesse de rotation qui détecte la vitesse de rotation (&) autour de l'axe transversal de la bicyclette électrique (100).
